# EUROPÄISCHE PATENTSCHRIFT

(11) **EP 2 791 370 B1**
(45) Veröffentlichungstag und Bekanntmachung des Hinweises auf die Patenterteilung: **01.07.2015**
(21) Anmeldenummer: 12801584.9
(22) Anmeldetag: 14.12.2012
(51) Int. Cl.: C21B 3/08, C21B 5/06, C21B 7/00

(54) **KALTWINDERZEUGUNG AUS SCHLACKEWÄRME**
COLD WIND GENERATION FROM SLAG HEAT
PRODUCTION DE VENT FROID À PARTIR DE CHALEUR DE LAITIER

(30) Priorität: 16.12.2011 LU 91917
(43) Veröffentlichungstag der Anmeldung: 22.10.2014
(73) Patentinhaber: Paul Wurth S.A., 1122 Luxembourg (LU)
(72) Erfinder: SOLVI, Marc, L-3961 Ehlange (LU); SCHMIT, Louis, L-1456 Luxembourg (LU)
(74) Vertreter: Office Freylinger
(86) Internationale Anmeldenummer: PCT/EP2012/075536
(87) Internationale Veröffentlichungsnummer: WO 2013/087838

(56) Entgegenhaltungen:
- WO-A1-2011/026940
- DE-A1- 4 030 332
- JP-A- 62 074 009
- US-A- 4 350 326

## Beschreibung

### Technisches Gebiet

Die vorliegende Erfindung betrifft allgemein ein Verfahren und eine Anlage zur Kaltwinderzeugung aus Schlackewärme.

### Stand der Technik

Die Erzeugung von Roheisen in einem Hochofen bedingt einen erheblichen Energieaufwand, zur Erzeugung von als Verbrennungsluft dienender Druckluft (des sogenannten Kaltwindes) sowie zur Erhitzung und zum Schmelzen der Einsatzstoffe und zur Reduzierung der Eisen-Sauerstoff-Verbindungen. Sieht man vom mechanischen oder elektrischen Antrieb des Kaltwindverdichters ab, wird ein Großteil dieser Energie in Form organischer Kohlenstoffverbindungen zugeführt, in erster Linie als Koks, zusätzlich wahlweise als festes (z.B. Kohlestaub), flüssiges (z.B. Schweröl) oder gasförmiges (z.B. Erdgas) sogenanntes Ersatzreduktionsmittel. Die Umsetzung dieser Kohlenstoffverbindungen verursacht einen erheblichen CO₂-Ausstoß.

Dieser hohe Energieaufwand und die daraus resultierenden Umweltbelastungen rechtfertigen weitere Anstrengungen zur Rückgewinnung der in den Ausgangs- und Abfallstoffen erhaltenen Restenergie.

Die Ausnutzung des Gichtgases als Brenngas, zum Erhitzen des Kaltwindes in den sogenannten Winderhitzern, zum Betrieb von Wärmeöfen in den Walzwerken und zur elektrischen Energiegewinnung in Wärmekraftwerken, ist zum Teil seit dem 19. Jahrhundert bekannt. Die Verwendung des Gichtgases als Brenngas setzt jedoch voraus, dass dieses weitgehend frei ist von Verunreinigungen durch Feststoffpartikel. Die dazu erforderliche Gasreinigung erfolgt bis heute ganz überwiegend mit Hilfe von Wasser als Nassreinigung, mit der Folge, dass die fühlbare Wärme des Gichtgases weitestgehend verloren geht.

Die Ausnutzung der Druckenergie des Gichtgases durch eine Arbeit abgebende Entspannung in einer sogenannten Gichtgas-Entspannungsturbine ist ebenfalls seit Jahrzehnten Stand der Technik. Die in der Turbine gewinnbare Leistung wird sowohl durch das verfügbare Druckgefälle zwischen dem Gasaustritt aus der Gasreinigung und dem Gaseintritt in ein Reingasnetz als auch durch die Gastemperatur am Austritt aus der Gasreinigung und damit am Eintritt in die Turbine bestimmt. Wie im vorhergehenden Abschnitt dargestellt, ist diese Gastemperatur meist durch eine Nassreinigung bestimmt und liegt damit nur wenig über der Umgebungstemperatur.

Die an der Welle der Entspannungsturbine zur Verfügung stehende Abtriebsleistung wird in der Regel zur elektrischen Energieerzeugung mit Hilfe eines an die Turbine gekuppelten Generators genutzt. Die erforderliche Antriebsleistung des Kaltwindverdichters wird üblicherweise durch einen Elektromotor oder durch eine Dampfturbine geliefert.

In der Patentanmeldung WO 2011/026940 wird ein Verfahren zur Erhöhung der Gichtgas-Eintrittstemperatur in die Turbine und damit der Leistungsabgabe in der Turbine beschrieben, mit Hilfe einer zweistufigen Vorwärmung und unter der Maßgabe, die Eintrittstemperatur des entspannten Gichtgases in das Reingasnetz unter dem Grenzwert für die Gastemperatur im Reingasnetz zu halten. Die erste Stufe der Vorwärmung des zu entspannenden Gichtgases erfolgt durch Wärmeübertragung aus dem entspannten Gichtgas, während die zweite Stufe der Vorwärmung mit Hilfe von Fremdenergie erfolgt. Dabei bewirkt die Verschiebung der Entspannung in zunehmend höhere Temperaturbereiche dass, sieht man von Verlusten ab, die Zunahme der Leistungsabgabe der Turbine gleich der Zunahme der zugeführten Fremdenergie ist.

In JP 62 074009 wird ein Verfahren zur Rückgewinnung von Energie aus warmer granulierter Hochofenschlacke beschrieben. Aus dem Hochofen austretendes Gichtgas wird entstaubt und anschließend unter Verwendung der Druckdifferenz in einer Turbine entspannt. Die Turbine ist mechanisch an einen Stromerzeugungs-Generator gekoppelt. Das entstaubte Gichtgas wird vor dem Turbineneintritt mittels Wärmerückgewinnung anhand eines Wärmeübertragungsmediums erwärmt. Das Wärmeübertragungsmedium überträgt die Wärme von der rückgeführten granulierten Schlacke auf das entstaubte Gichtgas.

In DE 40 30 332 ist ein Verfahren zur Rückgewinnung von Energie des aus einem Hochofen stammenden Gichtgases offenbart. Es wird keine Energie aus den Schlacken gewonnen. Das fein und grobentstaubte Gichtgas wird in einer mit einem Stromerzeugungs-Generator koppelbaren Entspannungsturbine entspannt, um dann zur weiteren Verwendung in ein Gichtgasnetz eingeleitet zu werden. Zwei Verdichter und ein Stromerzeugungs-Generator sind mechanisch an die von der Turbine angetriebene Welle gekoppelt. Gichtgas sowie Luft werden von beiden Verdichtern angesaugt, komprimiert und anschließend einer Brennkammer zugeführt, wo sie unter Beimischung von hochkalorigem Brennstoff verbrannt werden. Im Anschluss an die Verbrennung wird das verbrannte Gemisch in einer Gichtgas-Entspannungsturbine auf den Turbinenaustrittsdruck unter Abgabe von Energie entspannt.

### Aufgabe der Erfindung

Eine Aufgabe der vorliegenden Erfindung ist es, ein alternatives Verfahren zur Energierückgewinnung bei der Herstellung von Roheisen in einem Hochofen sowie eine entsprechende Anlage bereitzustellen.

### Allgemeine Beschreibung der Erfindung

Diese Aufgabe wird erfindungsgemäß gelöst durch ein Verfahren zur Kaltwinderzeugung aus Schlackewärme wobei das Verfahren folgende Schritte umfasst:
a. Bereitstellen von heißer, granulierter Schlacke,
b. Bereitstellen von nassem Gichtgas,
c. Vorwärmen des nassen Gichtgases, wodurch vorgewärmtes Gichtgas entsteht,
d. Wärmeübertragung der heißen, granulierten Schlacke an das vorgewarmte Gichtgas wobei heißes Gichtgas entsteht,
e. Entspannen des heißen Gichtgases in einer Turbine, wobei Energie freigesetzt wird und entspanntes Gichtgas entsteht,
f. Nutzung der freigesetzten Energie zum Antrieb eines Kaltwindverdichters zum Verdichten des Kaltwindes wobei der verdichtete Kaltwind in einen Hochofen geführt wird
wobei durch das Entspannen des heißen Gichtgases in einer Turbine eine Welle angetrieben wird, wobei diese Welle den Kaltwindverdichter antreibt und wobei das entspannte Gichtgas zum Vorwärmen des nassen Gichtgases genutzt wird, wodurch kaltes, entspanntes Gichtgas entsteht.

Bei den Arbeiten an dieser Erfindung wurde festgestellt, dass die Wärmerückgewinnung aus der schmelzflüssigen Schlacke zur Erwärmung des Gichtgases vor der Turbine genutzt werden kann da die erzielbare Leistungsabgabe der Turbine ungefähr gleich der erforderlichen Wellenleistung des Kaltwindverdichters ist, wodurch zusätzlich Fremdenergie eingespart werden kann.

Die Verwendung der aus der Schlacke gewonnenen Wärme zur Kaltwinderzeugung hat den Vorteil, dass Wärmerückgewinnung und Ausnutzung in den Grenzen der gleichen Anlage und zeitlich parallel erfolgen, wodurch das Umwandeln in elektrische Energie, wie in WO 2011/026940 und JP 62 074009 dargestellt, umgangen werden kann und somit die Verluste in einem elektrischen Generator zur Spannungserzeugung und in einem elektrischen Motor zum Antrieb des Verdichters vermieden werden können.

Im Gegensatz zu DE 40 30 332, wird der verdichtete Kaltwind als Verbrennungsluft in einen Hochofen geführt. Vorteilhaft bei solch einer Ausgestaltung sind der vereinfachte Betrieb, die geringeren Kosten sowie der hohe Wirkungsgrad. Wie aus der Lehre der Strömungsmaschinen hervorgeht, ist in vielen Fällen der Verdichter einer der limitierenden Faktoren zur Erhöhung des Wirkungsgrads. Dies ist besonders bei kleineren Strömungsmaschinen der Fall, welche hohe Drehzahlen fahren müssen um den für einen hohen Wirkungsgrad benötigten Druckgradienten zu erreichen. Hohe Drehzahlen führen unweigerlich zu hohen Sekundärverlusten der Strömungen welche den Wirkungsgrad deutlich reduzieren. Deshalb werden in DE 40 30 332 auch zwei Verdichter zum Betrieb einer Turbine verwendet werden, welche die Kosten einer solchen Anlage natürlich deutlich erhöhen.

Das erfindungsgemäße Verfahren ist besonders vorteilhaft, da die Menge des verdichteten Gases unabhängig von der Menge des entspannten Gases ist, und somit Verdichter und Turbine, durch diesen zusätzlichen Freiheitsgrad bei idealem Wirkungsgrad betrieben werden können.

Gemäss einer bevorzugten Ausführung des Verfahrens weist das nasse Gichtgas einen Druck von 2 bis 4 bar ü und eine Temperatur von 30 bis 60 °C auf.

Das vorgewärmte Gichtgas weist bevorzugt einen Druck von 2 bis 4 bar ü und eine Temperatur von 140-200 °C auf.

Das heiße Gichtgas weist bevorzugt einen Druck von 2 bis 4 bar ü und eine Temperatur von 300 bis 420 °C auf.

Das entspannte Gichtgas weist bevorzugt einen Druck von 0.05 bis 0.4 bar ü auf.

Das heiße, entspannte Gichtgas weist bevorzugt eine Temperatur von 400 bis 290 °C auf.

Das kalte, entspannte Gichtgas weist bevorzugt eine Temperatur von 30 bis 80 °C auf.

Die Bereitstellung der heißen, granulierten Schlacke erfolgt bevorzugt dadurch, dass heiße flüssige Schlacke durch Eintrag von einem kalten Feststoff abgekühlt wird und erstarrt. Als kalter Feststoff wird bevorzugt erkaltete, glasig erstarrte und/oder Metallkörper verwendet werden, wobei die Metallkörper in Kugel- oder ähnlicher Form, vorzugsweise aus Eisen oder Stahl sind.

Die Wärmeübertragung der heißen, granulierten Schlacke an das nasse Gichtgas findet bevorzugt in einem Schachtkühler, in einem Röhrenkühler und/oder in einer Kugel- oder Rohrmühle statt.

Das in den obengenannten Verfahren zur Wärmerückgewinnung eintretende Gichtgas hat wegen der zuvor bereits erfolgten Vorwärmung im Vorwärmer zwischen entspanntem Gichtgas und zu entspannendem Gichtgas eine erhöhte Temperatur. Die Abkühlung der Schlacke ist deshalb ggf. begrenzt und ggf. kann eine zweite Stufe der Wärmerückgewinnung der in der Schlacke verbliebenen Energie nachgeschaltet werden.

### Beispielrechnung:

Betrachtet wird ein Hochofen mit einer Roheisenausbringung von 10.000 t/d. Die Kaltwindrate (trocken) beträgt 1.000 Nm³/t, die Gichtgasrate 1.700 Nm³/t.

Der Kaltwinddruck beträgt 4,5 bar Überdruck (ü). Bei einem Verdichterwirkungsgrad von 0,8036 (innerer Wirkungsgrad 82 %, mechanischer Wirkungsgrad 98 %) beträgt dann der rechnerische Leistungsbedarf an der Verdichterkupplung des Kaltwindverdichters, zur Erzeugung von 423.875 Nm³/h feuchten Kaltwindes, 34,28 MW.

Der Gichtdruck des Hochofens beträgt 2,5 bar ü, der Gichtgasdruck nach der nassen Gasreinigung 2,2 bar ü bei einer Temperatur von 45 °C. Das gereinigte Gichtgas, rechnerischer Mengenstrom 754.830 Nm³/h feucht, wird durch das entspannte Gichtgas von 45 °C auf 170 °C erwärmt, im Gegenzug das entspannte Gichtgas von 243 °C auf 65 °C abgekühlt. Dabei beträgt der Druckverlust im Wärmeübertrager jeweils 0,1 bar, der Reingasnetzdruck 0,1 bar ü.

In einem zweiten Wärmetauscher wird das Gichtgas von 170 °C auf 362 °C erwärmt. Die dazu erforderliche Wärmeleistung beträgt 59,95 MW. Der Druckverlust des Gichtgases in diesem zweiten Wärmeübertrager beträgt wiederum 0,1 bar.

In der Turbine erfolgt dann die Entspannung des Gichtgases von 2,0 bar ü auf 0,2 bar ü. Die entsprechende Temperaturabsenkung erfolgt von 362 °C auf 243 °C. Bei einem Wirkungsgrad 0,8526 (innerer Wirkungsgrad 87 %, mechanischer Wirkungsgrad 98 %) beträgt die Leistungsabgabe an der Welle 34,28 MW, und ist damit gleich dem oben angegebenen Leistungsbedarf an der Welle zur Erzeugung des Kaltwindes.

Bei einer Schlackenrate von 200 bis 300 kg/t und einer Schlackeenthalpie von 1.700 bis 2.100 kJ/kg beträgt die verfügbare Bruttowärme der Schlacke 39 bis 73 MW und liegt damit im Bereich der oben genannten 59,95 MW zur Erhitzung des Gichtgases vor der Turbine. Natürlich lässt sich die Bruttowärme der Schlacke grundsätzlich und wegen Wärmeverlusten nicht voll ausnutzen, da das Wärme aufnehmende Gichtgas in der Beispielrechnung bereits mit 170 °C in den Wärmeübertrager eintritt und somit die Schlacke nicht auf Umgebungstemperatur abkühlen kann. Es ist aber leicht vorstellbar, die fehlende Wärmeleistung zur Erhitzung des Gichtgases auf die gewünschte Turbineneintrittstemperatur durch Verbrennen von Gichtgas zu gewinnen. Je MW zusätzlich erforderlicher Bruttowärme wären circa 1.300 Nm³/h Gichtgas zu verbrennen.

Zum Vergleich ergäbe die Entspannung des Gichtgases bei 45 °C, von 2,2 bar ü auf 0,1 bar ü (keine Druckverluste in Wärmeübertragern) eine Leistungsabgabe an der Welle von rechnerisch 18,94 MW. Die zugeführten 59,95 MW Wärme werden also mit einem Wirkungsgrad von (34,28-18,94)/59,95 = 0,256 oder knapp 26 % in mechanische Energie umgesetzt.

### Kurze Beschreibung der Figuren

Weitere Einzelheiten und Vorteile der Erfindung können der nachfolgenden ausführlichen Beschreibung möglicher Ausführungsformen der Erfindung anhand der beiliegenden Figur entnommen werden. Diese zeigt:

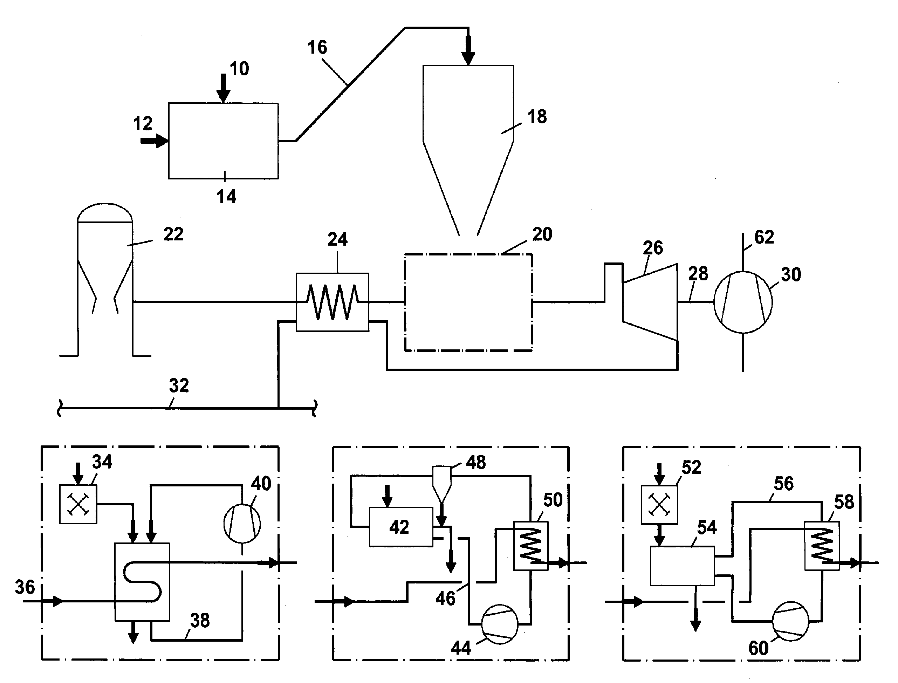

Fig. 1 ein Schema des Verfahrens sowie drei alternative Möglichkeiten die Wärmeübertragung von der heißen Schlacke an das Gichtgas zu übertragen.

### Beschreibung einer/mehrerer Ausgestaltung(en) der Erfindung

Im Folgenden werden verschiedene Ausführungen dieser Wärmerückgewinnung und Nutzung zur Kaltwinderzeugung mit Bezug auf Fig. 1 dargestellt:

Die periodisch, jeweils während eines Abstichs anfallende, flüssige, heiße Schlacke 10 wird durch den Eintrag von kaltem Feststoff 12 in einer Granulierungsanlage 14 abgekühlt und erstarrt, wobei das entstehende heiße Feststoffgemisch noch eine möglichst hohe Temperatur hat, welche im wesentlichen durch die anschließende Verarbeitung des Gemischs begrenzt wird.

Als kalter Feststoff können z.B. erkaltete, glasig erstarrte Hochofenschlacken dienen. Die Verwendung kalter Hochofenschlacke hat den Vorteil, dass nach ihrem Eintragen in die flüssige Schlacke ein homogenes heißes Feststoffgemisch entsteht.

Zusätzlich oder alternativ können aber auch Metallkörper in Kugel- oder ähnlicher Form, vorzugsweise aus Eisen oder Stahl, als kalter Feststoff dienen. Die Metallkörper bewirken bei ihrem Eintrag in die flüssige Schlacke, eine schnellere Erstarrung der flüssigen Schlacke und damit eine Erhöhung des glasig, also nicht-kristallin erstarrten Anteils. Dies kann vorteilhaft oder notwendig sein, je nach weiterer stofflicher Verwendung dieser Schlacke.

Das periodisch, jeweils während eines Abstichs anfallende, heiße Feststoffgemisch kann in einem Pufferbunker oder -silo 18 zwischengespeichert und dann kontinuierlich als granulierte Schlacke der Einrichtung 20 zur Wärmerückgewinnung zugeführt.

Das heiße Feststoffgemisch wird anschließend in eine Wärmeübertragungsvorrichtung 20 eingebracht. Drei verschiedene Varianten dieser Wärmeübertragungsvorrichtung 20 sind auf den Ausrissen a, b und c der Figur 1 dargestellt.

Das Gichtgas aus dem Hochofen wird in einer Nassreinigungsvorrichtung 22 von Feststoffen befreit, mit Wasserdampf angereichert und bis auf ungefähr 45°C abgekühlt. Das nasse, kalte Gichtgas wird dann in einen Vorwärmer 24 auf ungefähr 170°C und anschließend in einem Wärmeübertrager 20 auf ungefähr 360°C aufgeheizt. Dieses heiße Gichtgas wird in eine Gichtgasentspannungsturbine 26 eingespeist und anschließend als entspanntes, aber immer noch heißes Gichtgas im Gegenstrom in dem Vorwärmer 24 genutzt, um das nasse, kalte Gichtgas vorzuwärmen. Durch das Entspannen des Gichtgases wird die Turbine 26 angetrieben und die Energie wird auf eine Welle 28 übertragen, die den Kaltwindverdichter 30 antreibt. Der verdichtete Kaltwind 62 wird in den Hochofen geführt. Das entspannte, kalte Gichtgas wird schlussendlich in ein Reingasnetz 32 eingespeist.

In einer ersten Variante der Wärmeübertragung von der Schlacke auf das Gichtgas, wie auf Ausriss Ader Fig. 1 dargestellt, wird das heiße Feststoffgemisch durch einen Brecher 34 geführt, zerkleinert und in einen Schachtkühler 36 gefüllt. Im Schachtkühler 36, wie z.B. von der Firma Grenzebach beschrieben, erfolgt der Wärmeübergang vom Feststoffgemisch auf das durch Rohrleitungen an den Schachtwänden und/oder in der Schüttung geführte Gichtgas.

Die Wärmeübertragung kann des weiteren durch einen Luftkreislauf 38 unterstützt und verbessert werden. Die Luft verstärkt die Übertragung der Wärme durch die Konvektion zwischen Feststoff und Rohrleitungs-Außenflächen. Die Luft im Luftkreislauf 36 wird durch z.B. einen Ventilator 40 gefördert, dem ein geeigneter Feststoffabscheider, z.B. ein Wirbler, vorgeschaltet sein kann.

In einer anderen Ausführung der Wärmeübertragung von der Schlacke auf das Gichtgas, wie auf Ausriss B der Fig. 1 dargestellt wird das heiße Feststoffgemisch in eine Kugel- oder Rohrmühle 42 gefüllt und dort zerkleinert. Als Mahlkörper kommen ggf. die zur Abkühlung der flüssigen Schlacke verwendeten Metallkörper zur Verwendung, andernfalls herkömmliche Mahlkugeln. Ein Ventilator 44 fördert Luft über einen Luftkreislauf 46 in die Mühle 42. Diese erhitzt sich an den Mahlkörpern und am Mahlgut, wird über einen Feststoffabscheider 48, z.B. einen Wirbler, geführt und gibt anschließend in einem herkömmlichen Wärmeübertrager 50 die Wärme an das Gichtgas ab.

In einer weiteren Ausführung der Wärmeübertragung von der Schlacke auf das Gichtgas, wie auf Ausriss C der Fig. 1 dargestellt wird das heiße Feststoffgemisch durch einen Brecher 52 geführt, zerkleinert und in einen Drehkühler 54, z.B. ein rotierender Röhrenkühler gefüllt. In diesem rotierenden Röhrenkühler, wie z.B. von der Firma Grenzebach beschrieben, erfolgt der Wärmeübergang vom Feststoffgemisch durch einen Luftkreislauf 56. Die Luft erhitzt sich an den Röhren und gibt anschließend in einem herkömmlichen Wärmeübertrager 58 die Wärme an das Gichtgas ab. Die Kreislaufluft wird z.B. durch einen Ventilator 60 gefördert.

Das in den obengenannten Verfahren zur Wärmerückgewinnung eintretende Gichtgas hat wegen der ggf. zuvor bereits erfolgten ersten Stufe der Vorwärmung im Wärmeübertrager zwischen entspanntem Gichtgas und zu entspannendem Gichtgas eine erhöhte Temperatur. Die Abkühlung der Schlacke ist deshalb ggf. begrenzt und ggf. kann eine zweite Stufe der Wärmerückgewinnung nachgeschaltet werden.

### Zeichenerklärung:

- 10: Flüssige Schlacke
- 12: Kalter Feststoff
- 14: Granulierungsanlage
- 16: Feststoffgem isch
- 18: Puffersilo
- 20: Wärmeübertragungsvorrichtung
- 22: Nassreinigungsvorrichtung
- 24: Vorwärmer
- 26: Gichtgasentspannungsturbine
- 28: Welle
- 30: Kaltwindverdichter
- 32: Reingasnetz
- 34: Brecher
- 36: Schachtkühler
- 38: Luftkreislauf
- 40: Ventilator
- 42: Rohrmühle
- 44: Ventilator
- 46: Luftkreislauf
- 48: Feststoffabscheider
- 50: Wärmeübertrager
- 52: Brecher
- 54: Drehkühler
- 56: Luftkreislauf
- 58: Wärmeübertrager
- 60: Ventilator
- 62: verdichteter Kaltwind

## Patentansprüche

1. Verfahren zur Kaltwinderzeugung aus Schlackewärme wobei das Verfahren folgende Schritte umfasst:
a. Bereitstellen von heißer, granulierter Schlacke,
b. Bereitstellen von nassem Gichtgas,
c. Vorwärmen des nassen Gichtgases, wodurch vorgewärmtes Gichtgas entsteht,
d. Wärmeübertragung der heißen, granulierten Schlacke an das vorgewärmte Gichtgas wobei heißes Gichtgas entsteht,
e. Entspannen des heißen Gichtgases in einer Turbine, wobei Energie freigesetzt wird und entspanntes Gichtgas entsteht,
f. Nutzung der freigesetzten Energie zum Antrieb eines Kaltwindverdichters zum Verdichten des Kaltwindes wobei der verdichtete Kaltwind in einen Hochofen geführt wird,
wobei durch das Entspannen des heißen Gichtgases in einer Turbine eine Welle angetrieben wird, wobei diese Welle den Kaltwindverdichter antreibt und wobei das entspannte Gichtgas zum Vorwärmen des nassen Gichtgases genutzt wird, wodurch kaltes, entspanntes Gichtgas entsteht.

2. Verfahren nach Anspruch 1, **dadurch gekennzeichnet, dass** das nasse Gichtgas einen Druck von 2 bis 4 bar ü und eine Temperatur von 30 bis 60 °C aufweist.

3. Verfahren nach Anspruch 1 oder 2, **dadurch gekennzeichnet, dass** das vorgewärmte Gichtgas einen Druck von 2 bis 4 bar ü und eine Temperatur von 140 bis 200 °C aufweist.

4. Verfahren nach einem der Ansprüche 1 bis 3, **dadurch gekennzeichnet** das heiße Gichtgas einen Druck von 2 bis 4 bar ü und eine Temperatur von 300 bis 420 °C aufweist.

5. Verfahren nach einem der Ansprüche 1 bis 4, **dadurch gekennzeichnet, dass** das entspannte Gichtgas einen Druck von 0.05 bis 0.4 bar ü aufweist.

6. Verfahren nach einem der Ansprüche 1 bis 5, **dadurch gekennzeichnet, dass** das heiße, entspannte Gichtgas eine Temperatur von 400 bis 290 °C aufweist.

7. Verfahren nach einem der Ansprüche 1 bis 6, **dadurch gekennzeichnet, dass** das kalte entspannte Gichtgas eine Temperatur von 30 bis 80 °C aufweist.

8. Verfahren nach einem der Ansprüche 1 bis 7, **dadurch gekennzeichnet, dass** die Bereitstellung der heißen, granulierten Schlacke dadurch erfolgt, dass heiße flüssige Schlacke durch Eintrag von einem kalten Feststoff abgekühlt wird und erstarrt.

9. Verfahren nach Anspruch 8, **dadurch gekennzeichnet, dass** als kalter Feststoff, erkaltete, glasig erstarrte und/oder Metallkörper verwendet werden.

10. Verfahren nach einem der Ansprüche 1 bis 9, **dadurch gekennzeichnet, dass** die Wärmeübertragung der heißen, granulierten Schlacke an das nasse Gichtgas in einem Schachtkühler, in einem Röhrenkühler und/oder in einer Kugel- oder Rohrmühle stattfindet.

## Claims

1. A method for generating cold-air blast from slag heat, wherein the method comprises the following steps:
a. providing hot, granulated slag,
b. providing wet blast furnace gas,
c. preheating the wet blast furnace gas, whereby preheated blast furnace gas is obtained,
d. transferring heat from the hot, granulated slag to the preheated blast furnace gas, wherein hot blast furnace gas is obtained,
e. expanding the hot blast furnace gas in a turbine, wherein energy is released and expanded blast furnace gas is obtained,
f. using the released energy to drive a cold-air blast compressor for compressing the cold-air blast, wherein the compressed cold-air blast is passed into the blast furnace,
wherein a shaft is driven by expansion of the hot blast furnace gas in a turbine, wherein said shaft drives the cold-air blast compressor and wherein the expanded blast furnace gas is used for preheating the wet blast furnace gas, whereby cold, expanded blast furnace gas is obtained.

2. The method according to claim 1, **characterized in that** the wet blast furnace gas has a pressure of 2 to 4 bar(g) and a temperature of 30 to 60°C.

3. The method according to claim 1 or claim 2, **characterized in that** the preheated blast furnace gas has a pressure of 2 to 4 bar(g) and a temperature of 140 to 200°C.

4. The method according to one of claims 1 to 3, **characterized in that** the hot blast furnace gas has a pressure of 2 to 4 bar(g) and a temperature of 300 to 420°C.

5. The method according to one of claims 1 to 4, **characterized in that** the expanded blast furnace gas has a pressure of 0.05 to 0.4 bar(g).

6. The method according to one of claims 1 to 5, **characterized in that** the hot, expanded blast furnace gas has a temperature of 400 to 290°C.

7. The method according to one of claims 1 to 6, **characterized in that** the cold expanded blast furnace gas has a temperature of 30 to 80°C.

8. The method according to one of claims 1 to 7, **characterized in that** the hot, granulated slag is provided **in that** hot liquid slag is cooled by introduction of a cold solid and solidifies.

9. The method according to claim 8, **characterized in that** cooled, vitreously solidified slag and/or metal bodies are used as the cold solid.

10. A method according to one of claims 1 to 9, wherein heat transfer from the hot, granulated slag to the wet blast furnace gas proceeds in a moving-bed cooler, in a tubular cooler and/or in a ball mill or tube mill.

## Revendications

1. Procédé de production de vent froid à partir de chaleur de laitier, le procédé comprenant les étapes suivantes :
a. mise à disposition de laitier granulé chaud,
b. mise à disposition de gaz de gueulard humide,
c. préchauffage du gaz de gueulard humide, ce qui permet d'obtenir du gaz de gueulard préchauffé,
d. transfert de chaleur du laitier granulé chaud au gaz de gueulard préchauffé, ce qui permet d'obtenir du gaz de gueulard chaud,
e. détente du gaz de gueulard chaud dans une turbine, ce qui libère de l'énergie et permet d'obtenir du gaz de gueulard détendu,
f. utilisation de l'énergie libérée pour l'entraînement d'un compresseur à vent froid destiné à comprimer le vent froid, le vent froid comprimé étant conduit dans un haut-fourneau,
la détente du gaz de gueulard chaud dans une turbine permettant d'entraîner un arbre, cet arbre entraînant le compresseur à vent froid et le gaz de gueulard détendu étant utilisé pour préchauffer le gaz de gueulard humide, ce qui permet d'obtenir du gaz de gueulard détendu froid.

2. Procédé selon la revendication 1, **caractérisé en ce que** le gaz de gueulard humide est à une pression de 2 à 4 bar de surpression et à une température de 30 à 60 °C.

3. Procédé selon la revendication 1 ou 2, **caractérisé en ce que** le gaz de gueulard préchauffé est à une pression de 2 à 4 bar de surpression et à une température de 140 à 200 °C.

4. Procédé selon l'une des revendications 1 à 3, **caractérisé en ce que** le gaz de gueulard chaud est à une pression de 2 à 4 bar de surpression et à une température de 300 à 420 °C.

5. Procédé selon l'une des revendications 1 à 4, **caractérisé en ce que** le gaz de gueulard détendu est à une pression de 0.05 à 0.4 bar de surpression.

6. Procédé selon l'une des revendications 1 à 5, **caractérisé en ce que** le gaz de gueulard détendu chaud est à une température de 400 à 290 °C.

7. Procédé selon l'une des revendications 1 à 6, **caractérisé en ce que** le gaz de gueulard détendu froid est à une température de 30 à 80 °C.

8. Procédé selon l'une des revendications 1 à 7, **caractérisé en ce que** la mise à disposition du laitier granulé chaud est obtenue grâce au fait que du laitier liquide chaud est refroidi par introduction d'une matière solide froide et se solidifie.

9. Procédé selon la revendication 8, **caractérisé en ce que** l'on utilise comme matière solide froide des corps refroidis, des corps solidifiés vitreux et/ou des corps métalliques.

10. Procédé selon l'une des revendications 1 à 9, **caractérisé en ce que** le transfert de chaleur du laitier granulé chaud au gaz de gueulard humide a lieu dans un refroidisseur à puits, dans un refroidisseur tubulaire et/ou dans un broyeur à boulets ou tubulaire.
